# EUROPÄISCHE PATENTSCHRIFT

(11) **EP 2 815 460 B1**
(45) Veröffentlichungstag und Bekanntmachung des Hinweises auf die Patenterteilung: **08.05.2019**
(21) Anmeldenummer: 13700844.7
(22) Anmeldetag: 14.01.2013
(51) Int. Cl.: H01Q 13/22, H01P 3/02, H01P 3/12, H01P 5/103, H04B 5/00

(54) **ANORDNUNG ZUR DATENÜBERTRAGUNG ZWISCHEN EINEM ERSTEN ANLAGENTEIL, INSBESONDERE STATIONÄRER ANLAGENTEIL, UND EINEM RELATIV ZUM ERSTEN ANLAGENTEIL VERFAHRBAREN MOBILTEIL**
ARRANGEMENT FOR DATA TRANSMISSION BETWEEN A FIRST SYSTEM COMPONENT, IN PARTICULAR A STATIONARY SYSTEM COMPONENT, AND A MOBILE COMPONENT THAT IS MOVABLE RELATIVE TO THE FIRST SYSTEM COMPONENT
ENSEMBLE DE TRANSMISSION DE DONNÉES ENTRE UNE PREMIÈRE PARTIE D'INSTALLATION, EN PARTICULIER FIXE, ET UNE PARTIE MOBILE PAR RAPPORT À LA PREMIÈRE PARTIE D'INSTALLATION

(30) Priorität: 14.02.2012 DE 102012002718
(43) Veröffentlichungstag der Anmeldung: 24.12.2014
(73) Patentinhaber: SEW-EURODRIVE GmbH & Co. KG, 76646 Bruchsal (DE)
(72) Erfinder: SCHÄFER, Thomas, 76689 Neuthard (DE); BERGER, Ralf, 76297 Stutensee (DE); THOME, Markus, 76646 Bruchsal (DE)
(86) Internationale Anmeldenummer: PCT/EP2013/000087
(87) Internationale Veröffentlichungsnummer: WO 2013/120572

(56) Entgegenhaltungen:
- WO-A2-2011/047777
- DE-A1-102004 008 571
- DE-A1-102009 052 871

## Beschreibung

Die Erfindung betrifft eine Anordnung zur Datenübertragung zwischen einem ersten Anlagenteil, insbesondere stationärer Anlagenteil, und einem relativ zum ersten Anlagenteil verfahrbaren Mobilteil.

Es ist bekannt, Daten mittels Hohlleitern zu übertragen.

**Aus der** DE 10 2009 052 871 A1 **ist eine Vorrichtung zur Energie- und Datenübertragung bekannt, bei welcher ein Verbindungsteil zwei Profilverbinderteile verbindet.**

**Aus der** WO 2011 / 047777 A2 **ist eine Anlage mit schienengeführtem Fahrzeug bekannt.**

**Aus der** DE 10 2004 008 571 A1 **ist ein Tragschienenprofil mit integriertem Schlitzhohlleiter zur Datenübertragung bekannt.**

Der Erfindung liegt daher die Aufgabe zugrunde, bei der Datenübertragung in einer Anlage eine verbesserte Datenübertragung zu erreichen, insbesondere ein verbessertes Signal-Rausch-Verhältnis.

Erfindungsgemäß wird die Aufgabe bei der Anordnung zur Datenübertragung nach den in Anspruch 1 angegebenen Merkmalen gelöst.

Wichtige Merkmale der Erfindung bei der Anordnung sind, dass sie zur Datenübertragung zwischen einem ersten Anlagenteil, insbesondere stationärer Anlagenteil, und einem relativ zum ersten Anlagenteil verfahrbaren Mobilteil vorgesehen ist,
wobei das Mobilteil ein auf einer Schiene des ersten Anlagenteils verfahrbares Fahrzeug ist,
wobei der erste Anlagenteil einen Schlitzhohlleiter aufweist, wobei sich der Schlitz in Fahrtrichtung erstreckt,
wobei eine am Mobilteil angeordnete Antenne durch den Schlitz in den Hohlleiterbereich des Schlitzhohlleiters hineinragt,
wobei der Querschnitt, insbesondere quer zur Fahrtrichtung gesehen, des Hohlleiterbereichs symmetrisch zum Schlitzbereich ausgeführt ist, wobei der Hohlleiterbereich aus dem Schlitzbereich und zwei, beidseitig des Schlitzbereiches angeordneten Teilbereichen, insbesondere Seitenbereichen, gebildet ist,
wobei eine Antenne des ersten Anlagenteils, insbesondere also eine stationär angeordnete Antenne, quer zur Fahrtrichtung gesehen außermittig, in den Hohlleiterbereich des Schlitzhohlleiters hineinragt, insbesondere also in einen der Teilbereiche,
wobei in jedem Teilbereich ein Kammreflektor angeordnet ist, **wobei die Kammreflektoren miteinander einstückig ausgeführt sind.**

**Von Vorteil ist dabei, dass eine einfache Montage ausführbar ist und die relative Positionierung der Kammreflektoren einfach und ohne besonderen Aufwand ausgeführt ist. Außerdem ist eine hohe Bandbreite erreichbar, bei in Schienenrichtung nicht gleich langer Ausführung der beiden Kammreflektoren.**

**Mittels der Kammreflektoren ist der Schlitzhohlleiter an der entsprechenden Position für elektromagnetische Wellen reflektierend ausgeführt, also abgesperrt. Auf diese Weise sind also bezüglich der Datenübertragung voneinander unabhängig arbeitende Schienenstreckenabschnitte herstellbar. In jedem Abschnitt sind dann also unabhängig voneinander verschiedene Datensignale übertragbar zwischen Fahrzeug und einer jeweiligen stationären elektronischen Einheit. Somit tauscht das Fahrzeug abhängig von der Position in der Schienenanlage mit verschiedenen stationären Einheiten Informationen aus.**

**Bei einer vorteilhaften Ausgestaltung sind die Kammreflektoren aus einem Biegeteil ausgeführt sind, insbesondere aus einem Stanz-Biegeteil. Von Vorteil ist dabei, dass eine einfache Fertigung durch Biegen eines Blechs und/oder Laserschneiden und/oder Stanzen ermöglicht ist.**

**Bei einer vorteilhaften Ausgestaltung sind das Biegeteil mittels Schrauben mit dem Schlitzhohlleiterprofil verbunden, deren Schraubenköpfe in den Schlitzbereich hineinragen. Von Vorteil ist dabei, dass die Betätigung der Schrauben und das zuvor notwendige Bohren der Löcher durch das Einführen des Bohrwerkzeuges durch den Schlitzbereich einbringbar ist. Bei der Herstellung ist also auch ein sehr langer Bohrer verwendbar, der durch den Schlitzbereich in den Bodenabschnitt des Schlitzhohlleiters reicht. Der Platz für das Bohrwerkzeug, insbesondere Bohrmaschine, ist in der anderen Richtung bei der Bearbeitung nicht begrenzt durch das Schlitzhohlleiterprofil oder Schienenteil. Somit ist ein einfaches einbringen der Bohrungen ermöglicht und ebenso ein einfaches Befestigen der Kammreflektoren am Schienenteil.**

**Bei einer vorteilhaften Ausgestaltung sind in einem ersten Bereich die Antenne und ein erster Kammreflektor in einem ersten Teilbereich angeordnet, wobei der zweite Kammreflektor in dem anderen Teilbereich angeordnet ist,**

**insbesondere wobei in einem in Schienenrichtung davon beabstandeten anderen Bereich**
**eine weitere Antenne und ein weiterer erster Kammreflektor in dem ersten Teilbereich angeordnet sind und ein weiterer Kammreflektor in dem anderen Teilbereich angeordnet ist. Von Vorteil ist dabei, dass die Moden des Hohlleiters reflektiert werden an beiden Seiten.**

**Bei einer vorteilhaften Ausgestaltung weist eine erste in den Schlitzhohlleiter eingebrachte Bohrung zur Aufnahme einer Schraube, mit welcher das Biegeteil mit dem Schitzhohlleiterprofil schraubverbunden ist, einen Versatz zur im Schlitzbereich mittigen Lage auf**
**und**
**eine zweite in den Schlitzhohlleiter eingebrachte Bohrung weist zur Aufnahme einer zweiten Schraube, mit welcher das Biegeteil mit dem Schitzhohlleiterprofil zusätzlich schraubverbunden ist, einen gegengerichteten Versatz zur im Schlitzbereich mittigen Lage auf, insbesondere also auf der anderen Seite zur mittigen Lage angeordnet ist. Von Vorteil ist dabei, dass die Bohrungen, also Gewindebohrungen, durch den Schlitzbereich einbringbar und die darin einzuschraubenden Schrauben betätigbar sind ebenfalls durch den Schlitzbereich hindurch. Die Bohrungen sind dabei Sacklochbohrungen.**

Die Kammreflektoren weisen **in Schienenrichtung oder Fahrtrichtung zueinander einen Versatz auf. Von Vorteil ist dabei, dass der H10 Mode der elektromagnetischen Wellen im Hohlleiter besonders effektiv anregbar ist. Somit ist eine besonders fehlerarme Datenübertragung erreichbar und Störsignale verringerbar, also das Signal-Rausch-Verhältnis verbessert.**

Bei einer vorteilhaften Ausgestaltung ist das Mobilteil ein auf einer Schiene des ersten Anlagenteils verfahrbares Fahrzeug, insbesondere wobei die Schiene sich in Fahrtrichtung erstreckt und der Schlitzhohlleiter parallel zur Schiene verlegt ist,
insbesondere wobei die Schiene ein Profilschienenteil ist, insbesondere gefertigt als Aluminium-Strangguss-Profilteil. Von Vorteil ist dabei, dass eine besonders einfache Herstellung der Anlage mit geringer Teilezahl ausführbar ist, wobei Datenübertragung parallel zur Schiene verlegt ist.

Bei einer vorteilhaften Ausgestaltung ist der Schlitzhohlleiter aus einem Stranggussteil gefertigt, insbesondere Aluminium-Strangguss, insbesondere zumindest teilweise eloxierter Aluminium-Strangguss. Von Vorteil ist dabei, dass der Hohlleiter einfach fertigbar ist und eine Datenübertragung an ein Mobilteil ermöglicht ist, indem die Antenne desselben durch den in Fahrtrichtung verlaufenden Schlitz in den Hohlleiter hineinragt.

Bei einer vorteilhaften Ausgestaltung sind die Kammreflektoren gleichartig **oder alternativ in Schienenrichtung beziehungswiese Fahrtrichtung verschieden lang** ausgeführt. Von Vorteil ist dabei, dass eine einfache Herstellung ermöglicht ist bei geringer Teilezahl.

Bei einer vorteilhaften Ausgestaltung weisen die Kammreflektoren jeweils regelmäßig voneinander beabstandete Zinken auf, die in Fahrtrichtung aufgereiht hintereinander angeordnet sind. Von Vorteil ist dabei, dass der eine Schwingungsmode der elektromagnetischen Wellen besonders effektiv anregbar ist, also andere Schwingungsmoden möglichst wenig angeregt werden.

Bei einer vorteilhaften Ausgestaltung weisen die Kammreflektoren jeweils einen Grundkörper auf, an welchem die Zinken einstückig ausgeformt oder angeformt sind, insbesondere wobei die Zinken jeweils quaderförmig oder zylinderförmig ausgeführt sind. Von Vorteil ist dabei, dass eine einfache Herstellung als Gussteil oder als Stanzteil ausführbar ist.

Bei einer vorteilhaften Ausgestaltung sind Kammreflektoren aus Kupfer-haltigem Material ausgeführt, insbesondere als Stanz-Biegeteil. Von Vorteil ist dabei, dass eine geringe Absorption auftritt und eine einfache Herstellung ermöglicht ist.

Bei einer vorteilhaften Ausgestaltung ist die stationär angeordnete Antenne von einem Steckverbinderteil gehalten, mit welchem ein Koaxialsteckverbinderteil steckverbindbar ist,

insbesondere wobei das Steckverbinderteil schraubverbunden ist mit dem Schlitzhohlleiterteil.

Von Vorteil ist dabei, dass eine einfache Verbindungstechnik einsetzbar ist und die elektrische Steckverbindung zum Halten einsetzbar ist.

Bei einer vorteilhaften Ausgestaltung sind die Kammreflektoren seitlich des Schlitzbereichs, insbesondere also in den Teilbereichen, angeordnet sind. Von Vorteil ist dabei, dass die Antenne des Fahrzeugs ungestört in Fahrtrichtung im Schlitz verfahrbar ist.

Bei einer vorteilhaften Ausgestaltung sind die Kammreflektoren schraubverbunden mit dem Schlitzhohlleiterteil. Von Vorteil ist dabei, dass eine einfache Verbindungstechnik verwendbar ist.

Bei einer vorteilhaften Ausgestaltung ist der Schlitzhohlleiter an der Schiene formschlüssig verbunden, insbesondere eingehakt oder eingeklipst ist,
oder dass der Schlitzhohlleiter mit der Schiene einstückig ausgeführt ist, insbesondere als Stranggussprofilteil, insbesondere als Aluminium-Stranggussprofilteil. Von Vorteil ist dabei, dass eine einfache kostengünstige Herstellung ermöglicht ist, wobei die Parallelität der Fahrschiene und des Schlitzes des Schlitzhohlleiters fehlerfrei einhaltbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Querschnitt durch ein Schienenprofil mit integriertem Schlitzhohlleiter gezeigt, wobei mittels des Schlitzhohlleiters hochfrequente elektromagnetische Wellen zur Datenübertragung verwendbar sind.

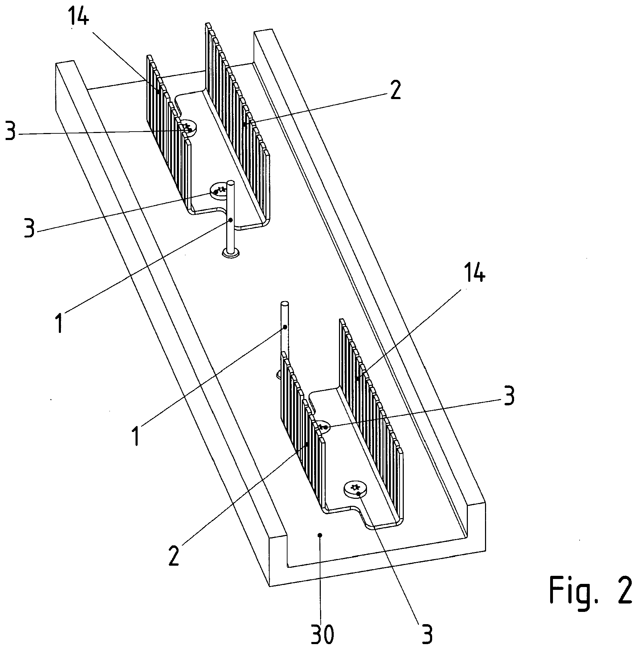

In der Figur 2 ist eine Schrägansicht auf die beiden am Boden des Schlitzhohlleiterabschnitts 12 angeordneten Kammreflektoren (2, 14) gezeigt.
In der Figur 3 ist eine zur Figur 2 zugehörige Draufsicht gezeigt.
In der Figur 4 ist eine Schrägansicht auf die beiden Kammreflektoren (2, 14) gezeigt.
In der Figur 5 ist eine zur Figur 4 zugehörige Draufsicht gezeigt.

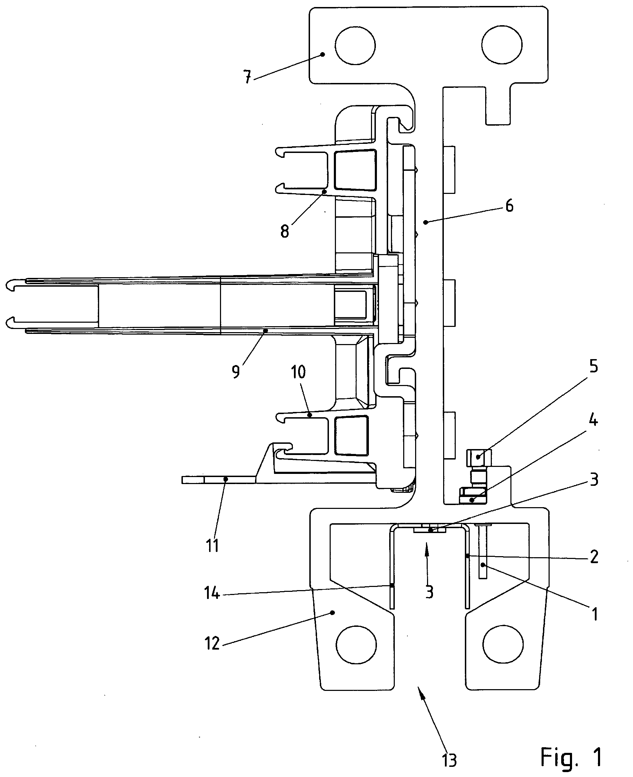

Wie in Figur 1 gezeigt, weist die erfindungsgemäße Anlage eine Schiene auf, deren Profil einen Tragschienenabschnitt 7 aufweist und ein sich daran anschließender Wandabschnitt 6, an dessen vom Tragschienenabschnitt 7 abgewandtem Endbereich ein Hohlleitergehäuseabschnitt 12 angeordnet ist, der den Hohlleiterbereich des Schlitzhohlleiters umgibt.

Vorzugsweise ist die Schiene als Stranggussteil hergestellt.

Der Tragschienenabschnitt 7 weist Abrollbereiche für Räder eines entlang der Schiene, also in Schienenrichtung, bewegbaren Schienenfahrzeugs auf.

Von der Querrichtung her kommend sind Halteteile (8, 9, 10) für Hinleiter und Rückleiter eines langgestreckt in der Anlage verlegten Primärleitersystems am Wandabschnitt 6 befestigt. Das Schienenfahrzeug ist mit einer Sekundärwicklung ausgestattet, welche induktiv mit dem Primärleitersystem koppelbar ist und aus der auf diese Weise induktiv übertragbaren Leistung versorgbar ist.

Anstatt dieser induktiven Versorgung ist bei einem anderen erfindungsgemäßen Ausführungsbeispiel auch eine Schleifversorgung am Wandabschnitt 6 anbringbar, wozu eine elektrische Schleifleitung am Wandabschnitt 6 befestigt wird.

Wie in Figur 1 gezeigt, ist am Schienenprofil ein Hohlleitergehäuseabschnitt 12 ausgebildet, so dass ein Schlitzhohlleiter im Schienenteil integriert ist. Mittels einer Antenne 1 ist an einer ersten Schienenposition ein Datensignal mittels elektromagnetischer Wellen in den Hohlleiter einkoppelbar und an einer anderen Schienenposition das Datensignal auskoppelbar mittels einer weiteren Antenne 1.

Das der Antenne 1 zugeführte Signal wird dabei über Koaxialkabel von außen herangeführt und dann über die Antenne 1 in den Hohlraum des Schlitzhohlleiters eingekoppelt beziehungsweise ausgekoppelt.

Die Antenne 1 ist in den seitlichen Taschenbereichen des Hohlraums, also in Querrichtung, also quer zur Schienenrichtung, beabstandet von der mittigen Lage angeordnet. Somit ist eine am Schienenfahrzeug angeordnete, durch den Schlitzberiech des Schlitzhohlleiters in den Hohlraum des Schlitzhohlleiters hineinragende Antenne kollisionsfrei verfahrbar in Schienenrichtung.

Mittels der Kammreflektoren (2, 14) ist eine Reflektierung der elektromagnetischen Wellen erreichbar, die vergleichbar ist mit der Reflexion an einer quer verlaufenden Wand. Trotzdem ist der Reflexionsbereich kollisionsfrei durchfahrbar vom Schienenfahrzeug mit seiner Antenne.

Der Schlitzbereich ist also bis zum Bodenabschnitt 30 des Hohlraums des Schlitzhohlleiters frei.

Der Hohlraum des Schlitzhohlleiters ist in Querrichtung weiter ausgedehnt als die Weite des Schlitzes 13 in Querrichtung. Entsprechend weist auch der Bodenabschnitt 50 eine entsprechend größere Ausdehnung auf in Querrichtung und es sind somit seitlich des in den Hohlraum sich senkrecht zum Bodenabschnitt 30 hin erstreckenden Schlitzbereiches Taschenbereiche gebildet.

Die Antenne 1 und die Kammreflektoren (2, 14) sind in diesen Taschenbereichen angeordnet, wodurch ein kollisionsfreies Durchfahren des Schlitzbereiches für die Antenne des Schienenfahrzeugs ermöglicht ist.

Dabei ist die Antenne 1 und ein erster Kammreflektor 2 in demselben Taschenbereich angeordnet. Im anderen Taschenbereich ist jeweils der andere Kammreflektor 14 angeordnet.

Die Anzahl der in Schienenrichtung hintereinander regelmäßig voneinander beabstandet angeordneten Zinken des ersten Kammreflektors 2 ist geringer als die Anzahl der in Schienenrichtung hintereinander regelmäßig voneinander beabstandet angeordneten Zinken des zweiten Kammreflektors 14.

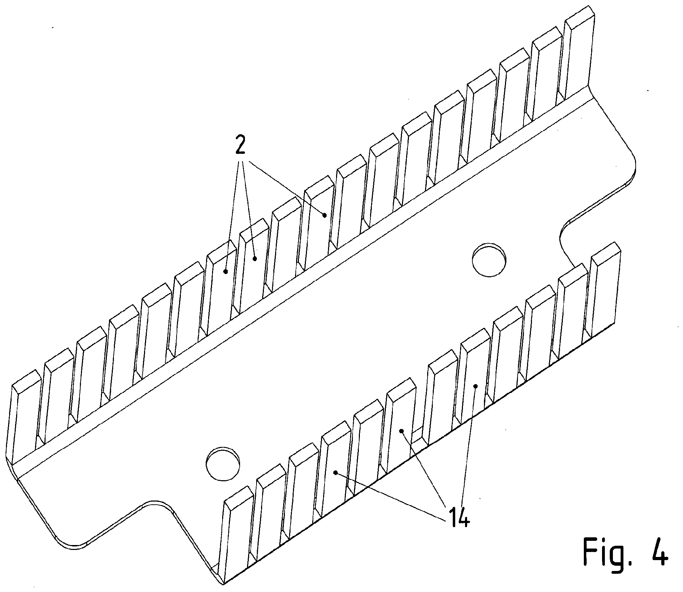

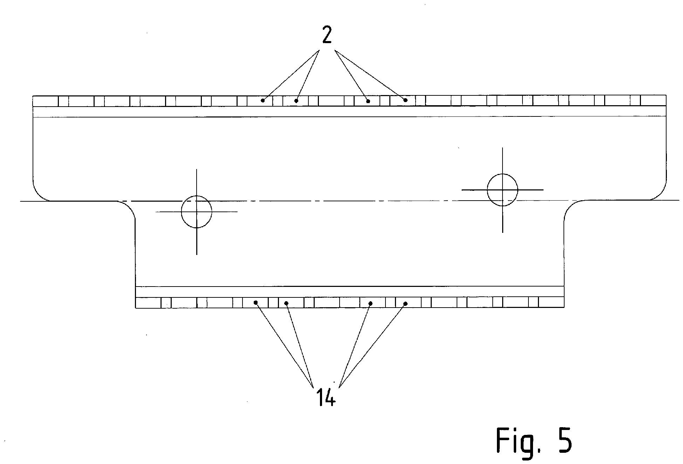

Die Kammreflektoren (2, 14) sind als einstückiges Biegeteil, insbesondere Stanz-Biegeteil, ausgeführt, wie in den Figuren 4 und 5 gezeigt.

Der auf der gleichen Seite wie die Antenne 1 angeordnete Kammreflektor 14 weist in Schienenrichtung eine geringere Ausdehnung auf als der Kammreflektor 2, welcher auf der anderen Seite angeordnet ist, insbesondere also auf der anderen Seite der Mittellinie.

Die einstückige Ausführung hat den weiteren Vorteil, dass die beiden Kammreflektoren (2, 14) in nur einem einzigen Arbeitsgang montierbar sind.

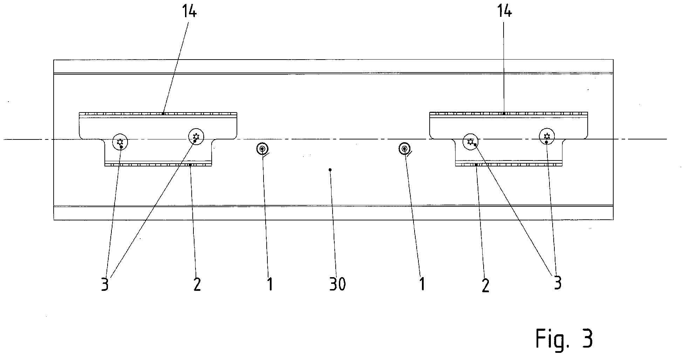

Wie in Figur 3 gezeigt, ist das einstückige Biegeteil mittels zwei Befestigungsschrauben 3 am Schienenprofilteil befestigt, wobei die beiden Schrauben 3 auf jeweils verschiedenen Seiten der Mittellinie angeordnet sind.

Auf diese Weise ist mittels der Bohrungen die Orientierung des Biegeteils eindeutig festlegbar und somit die Fehlerrate bei Montage verminderbar. Die Positionen der Bohrungen für die Schrauben 3 stellen also eine Codierung dar.

Da die Datenübertragung in Schienenrichtung nur innerhalb eines begrenzten Bereichs stattfindet, sind zur Abgrenzung des Bereichs die Kammreflektoren 2 und 14 vorgesehen. Die Beabstandung der Zinken des jeweiligen Kammreflektors (2, 14) vermindern die Wirbelstromverluste.

Die elektrische Leitung zur Antenne 1 führt durch eine durchgehende Bohrung im Schienenprofilteil ins Innere des Hohlraums des Schlitzhohlleiters, wo die Antenne 1 angeordnet ist. Im einfachsten Fall ist die elektrische Leitung als Antennenstab selbst ausgeführt, der an der äußeren Oberfläche angeschraubt ist und ins Innere des Hohlleiters hineinragt.

Bei einem anderen erfindungsgemäßen Ausführungsbeispiel ist am Schlitzhohlleiterprofil ein Haltemittel ausgeformt oder vorgesehen, so dass ein Einhaken, Einklipsen oder anderweitigem Verbinden des Schlitzhohlleiterprofils an einem Schienenteil, insbesondere Führungsschienenteil zur Führung des Fahrzeugs, insbesondere eines auf dem Schienenteil verfahrbaren Schienenfahrzeugs, ermöglicht ist. Auf diese Weise sind verschiedenartige Schienenteile mit einem Schlitzhohlleiter ausstattbar. Nur die Verbindungsschnittstelle muss am Schienenteil ausgeprägt werden, also eine Schnittstelle zum Einhaken oder Einklipsen oder anderweitigen Verbinden.

Bei einem weiteren erfindungsgemäßen Ausführungsbeispiel ist der Hohlleiter als Schlitzhohlleiterprofil ausgeführt, so dass er einerseits als Stranggussprofilteil, insbesondere Aluminium-Stranggussprofilteil, einfach und kostengünstig herstellbar ist und so dass andererseits eine Antenne eines in Profilrichtung sich bewegenden Fahrzeugs in den Schlitz hineinragen kann und daher Daten während der Bewegung austauschbar sind.

Das Schlitzhohlleiterprofilteil ist bei diesem weiteren Ausführungsbeispiel daher vorzugsweise an dem Schienenteil mittels des am Schlitzhohlleiterprofilteil angeordneten Halteteils verbunden. Auch eine andere Verbindungsart ist ausführbar.

Der Hohlraum des Schlitzhohlleiterprofilteils erstreckt sich wiederum in Profilrichtung gleichförmig. Quer zur Profilrichtung ist er symmetrisch zur Mitte aufgebaut. Der Schlitz, also die Öffnung, durch welche die Antenne des Fahrzeugs in den Hohlraum hineinragen darf, ist mittig angeordnet.

Zur Anregung des H10 - Modes ragt eine Antenne 1 wiederum außermittig in den Hohlraum hinein. Der Hohlraum ist wiederum quer zur Profilrichtung und quer zum Schlitzbereich aufgeweitet, so dass er aus dem Schlitzbereich und zwei spiegelsymmetrisch zum Schlitzbereich ausgeformten Teilbereichen, also Taschenbereichen, zusammengesetzt ist. Die Antenne 1 ragt also in einen der Teilbereiche hinein. Die Antenne 1 wird wiederum von einem Steckverbinderteil für Koaxialkabel gehalten, das an der Außenseite des Schlitzhohlleiterprofils angeordnet ist. Dabei ragt die Antenne 1 durch eine Ausnehmung im Schlitzhohlleiterprofil hindurch. Mittels des Koaxialkabels leitet die Antenne 1 empfangen Signale an eine elektronische Schaltung weiter, die mittels des Koaxialkabels verbunden ist. Das Steckverbinderteil ist mittels Befestigungsschrauben am Schienenprofilteil befestigt.

In Schienenrichtung hinter der Antenne 1 ist im Hohlraum in demjenigen Teilbereich, in welchen die Antenne hineinragt, wiederum ein erster Kammreflektor 2 angeordnet. Im anderen Teilbereich ist wiederum ein zweiter Kammreflektor 14 angeordnet, der jedoch in Profilrichtung versetzt angeordnet ist.

Im Gegensatz zu den in den Figuren abgebildeten Kammreflektoren (2, 14) sind diese im genannten weiteren Ausführungsbeispiel gleichartig ausgeführt. Durch einen in Schienenrichtung gesehen vorgegebenen Versatz der beiden, ansonsten parallel zueinander ausgerichteten Kammreflektoren (2, 14) zueinander ist der H10-Mode der elektromagnetischen Wellenstrahlung im Schlitzhohlleiterraumbereich einfach und ohne Aufwand anregbar.

Die Kammreflektoren 2 und 14 sind ebenfalls mittels Befestigungsschrauben 3 am Schlitzhohlleiterprofil schaubverbunden. Auch eine einstückige Ausführung der beiden Kammreflektoren durch wiederum ein Biegeteil, insbesondere ein Stanz-Biegeteil, ist ausführbar, so dass die Montage schnell und einfach ausführbar ist.

Entweder ist das Schlitzhohlleiterprofil wiederum integriert ausgeführt oder alternativ ist am Schlitzhohlleiterprofil ein Haltemittel 7 ausgeformt oder vorgesehen, so dass ein Einhaken des Schlitzhohlleiterprofils an einem Schienenteil, insbesondere Führungsschienenteil zur Führung des Fahrzeugs, insbesondere eines auf dem Schienenteil verfahrbaren Schienenfahrzeugs, ermöglicht ist.

### Bezugszeichenliste

- 1: Antenne
- 2: erster Kammreflektor
- 3: Befestigungsschrauben für Kammreflektor
- 4: Distanzring
- 5: Kappe
- 6: Wandabschnitt
- 7: Tragschienenabschnitt
- 8: Halteteil für Hinleiter
- 9: Halteteil für Rückleiter
- 10: Halteteil für Hinleiter
- 11: Barcodehalterung
- 12: Hohlleitergehäuseabschnitt
- 13: Schlitz
- 14: zweiter Kammreflektor
- 30: Bodenabschnitt des Hohlraums des Schlitzhohlleiters

## Patentansprüche

1. Anordnung zur Datenübertragung zwischen einem ersten Anlagenteil und einem relativ zum ersten Anlagenteil verfahrbaren Mobilteil, wobei das Mobilteil ein auf einer Schiene des ersten Anlagenteils verfahrbares Fahrzeug ist,
wobei der erste Anlagenteil einen Schlitzhohlleiter aufweist, wobei sich der Schlitz (13) in Fahrtrichtung erstreckt,
wobei eine am Mobilteil angeordnete Antenne (1) durch den Schlitz (13) in den Hohlleiterbereich des Schlitzhohlleiters hineinragt,
wobei der Querschnitt des Hohlleiterbereichs symmetrisch zum Schlitzbereich ausgeführt ist, wobei der Hohlleiterbereich aus dem Schlitzbereich und zwei, beidseitig des Schlitzbereiches angeordneten Teilbereichen gebildet ist,
wobei eine Antenne (1) des ersten Anlagenteils quer zur Fahrtrichtung gesehen außermittig, in den Hohlleiterbereich des Schlitzhohlleiters hineinragt, also in einen der Teilbereiche,
wobei in jedem Teilbereich ein **aus Kupfer-haltigem Material ausgeführter** Kammreflektor (2, 14) angeordnet ist,
**wobei die Kammreflektoren (2, 14) miteinander einstückig ausgeführt sind,**
**wobei die Kammreflektoren (2, 14) aus einem Biegeteil ausgeführt sind,**
**wobei das Biegeteil mittels Schrauben mit dem Schlitzhohlleiterprofil verbunden** ist, **deren Schraubenköpfe in den Schlitzbereich hineinragen,**
**wobei die Kammreflektoren (2, 14) in Schienenrichtung oder Fahrtrichtung zueinander einen Versatz** aufweisen, und **der H10 Mode der elektromagnetischen Wellen im Hohlleiter anregbar ist.**

2. Anordnung nach mindestens einem der vorangegangenen Ansprüche,
**dadurch gekennzeichnet, dass**
**in einem ersten Bereich die Antenne (1) und ein erster Kammreflektor (2) in einem ersten Teilbereich angeordnet sind, wobei der zweite Kammreflektor (14) in dem anderen Teilbereich angeordnet ist,**
**insbesondere wobei in einem in Schienenrichtung davon beabstandeten anderen Bereich**
**eine weitere Antenne (1) und ein weiterer erster Kammreflektor (2) in dem ersten Teilbereich angeordnet sind und ein weiterer Kammreflektor (14) in dem anderen Teilbereich angeordnet ist.**

3. Anordnung nach mindestens einem der vorangegangenen Ansprüche,
**dadurch gekennzeichnet, dass**
**eine erste in den Schlitzhohlleiter eingebrachte Bohrung zur Aufnahme einer Schraube, mit welcher das Biegeteil mit dem Schitzhohlleiterprofil schraubverbunden ist, einen Versatz zur im Schlitzbereich mittigen Lage aufweist**
**und**
**eine zweite in den Schlitzhohlleiter eingebrachte Bohrung zur Aufnahme einer zweiten Schraube, mit welcher das Biegeteil mit dem Schitzhohlleiterprofil zusätzlich schraubverbunden ist, einen gegengerichteten Versatz zur im Schlitzbereich mittigen Lage aufweist, insbesondere also auf der anderen Seite zur mittigen Lage angeordnet ist.**

4. Anordnung nach mindestens einem der vorangegangenen Ansprüche,
**dadurch gekennzeichnet, dass** die Schiene ein Profilschienenteil ist, insbesondere gefertigt als Aluminium-Strangguss-Profilteil.

5. Anordnung nach mindestens einem der vorangegangenen Ansprüche,
**dadurch gekennzeichnet, dass**
der Schlitzhohlleiter aus einem Stranggussteil gefertigt ist, insbesondere Aluminium-Strangguss, insbesondere zumindest teilweise eloxierter Aluminium-Strangguss.

6. Anordnung nach mindestens einem der vorangegangenen Ansprüche,
**dadurch gekennzeichnet, dass**
die Kammreflektoren (2, 14) gleichartig **oder alternativ in Schienenrichtung beziehungswiese Fahrtrichtung verschieden lang** ausgeführt sind.

7. Anordnung nach mindestens einem der vorangegangenen Ansprüche,
**dadurch gekennzeichnet, dass**
die Kammreflektoren (2, 14) jeweils regelmäßig voneinander beabstandete Zinken aufweisen, die in Fahrtrichtung aufgereiht hintereinander angeordnet sind, insbesondere zur Verringerung der Wirbelstromverluste.

8. Anordnung nach mindestens einem der vorangegangenen Ansprüche,
**dadurch gekennzeichnet, dass**
die Kammreflektoren (2, 14) jeweils einen Grundkörper aufweisen, an welchem die Zinken einstückig ausgeformt oder angeformt sind, insbesondere wobei die Zinken jeweils quaderförmig oder zylinderförmig ausgeführt sind.

9. Anordnung nach mindestens einem der vorangegangenen Ansprüche,
**dadurch gekennzeichnet, dass**
die stationär angeordnete Antenne (1) von einem Steckverbinderteil gehalten ist, mit welchem ein Koaxialsteckverbinderteil steckverbindbar ist,
insbesondere wobei das Steckverbinderteil schraubverbunden ist mit dem Schlitzhohlleiterteil.

10. Anordnung nach mindestens einem der vorangegangenen Ansprüche,
**dadurch gekennzeichnet, dass**
die Kammreflektoren (2, 14) seitlich des Schlitzbereichs, insbesondere also in den Teilbereichen, angeordnet sind, insbesondere also einen zur mittigen Position nicht verschwindenden Versatz aufweisen, insbesondere also quer zu Schienenrichtung oder Fahrtrichtung außermittig angeordnet sind,
und/oder dass
die Kammreflektoren (2, 14) schraubverbunden sind mit dem Schlitzhohlleiterteil.

11. Anordnung nach mindestens einem der vorangegangenen Ansprüche,
**dadurch gekennzeichnet, dass**
der Schlitzhohlleiter an der Schiene formschlüssig verbunden ist, insbesondere eingehakt oder eingeklipst ist,
oder dass der Schlitzhohlleiter mit der Schiene einstückig ausgeführt ist, insbesondere als Stranggussprofilteil, insbesondere als Aluminium-Stranggussprofilteil.

## Claims

1. Arrangement for data transmission between a first system part and a mobile part movable relative to the first system part,
wherein the mobile part is a vehicle that can move on a rail of the first system part,
wherein the first system part comprises a slotted waveguide, wherein the slot (13) extends in the direction of travel,
wherein an antenna (1) arranged on the mobile part protrudes through the slot (13) into the waveguide region of the slotted waveguide,
wherein the cross section of the waveguide region is symmetrical to the slot region, wherein the waveguide region is formed from the slot region and two portions arranged on either side of the slot region,
wherein, when viewed transversely to the direction of travel, an antenna (1) of the first system part protrudes off-centre into the waveguide region of the slotted waveguide, i.e. into one of the portions,
wherein a comb reflector (2, 14) made of copper-containing material is arranged in each portion,
wherein the comb reflectors (2, 14) are formed together in one piece,
wherein the comb reflectors (2, 14) are made from a bent part,
wherein the bent part is connected to the slotted waveguide profile by means of screws, the screw heads of which protrude into the slot region,
wherein the comb reflectors (2, 14) are offset from one another in the rail direction or direction of travel and the H10 mode of the electromagnetic waves can be stimulated in the waveguide.

2. Arrangement according to the preceding claim,
**characterised in that**
in a first region, the antenna (1) and a first comb reflector (2) are arranged in a first portion, wherein the second comb reflector (14) is arranged in the other portion,
in particular wherein, in a different region spaced apart therefrom in the rail direction, a further antenna (1) and a further first comb reflector (2) are arranged in the first portion and a further comb reflector (14) is arranged in the other portion.

3. Arrangement according to at least one of the preceding claims,
**characterised in that**
a first hole made in the slotted waveguide for receiving a screw, by which the bent part is screwed to the slotted waveguide profile, is offset from the central position in the slot region and
a second hole made in the slotted waveguide for receiving a second screw, by which the bent part is additionally screwed to the slotted waveguide profile, is offset from the central position in the slot region in the opposite direction, i.e. is arranged in particular on the other side from the central position.

4. Arrangement according to at least one of the preceding claims,
**characterised in that**
the rail is a DIN rail part, in particular produced as an aluminium continuously cast profiled part.

5. Arrangement according to at least one of the preceding claims,
**characterised in that**
the slotted waveguide is made from a continuously cast part, in particular aluminium continuous casting, in particular anodised aluminium continuous casting at least in part.

6. Arrangement according to at least one of the preceding claims,
**characterised in that**
the comb reflectors (2, 14) are the same length or alternatively are different lengths in the rail direction or direction of travel.

7. Arrangement according to at least one of the preceding claims,
**characterised in that**
the comb reflectors (2, 14) each comprise regularly spaced-apart prongs arranged in a row one behind the other in the direction of travel, in particular for reducing eddy-current losses.

8. Arrangement according to at least one of the preceding claims,
**characterised in that**
the comb reflectors (2, 14) each comprise a main body on which the prongs are integrally moulded or shaped, in particular wherein the prongs are square or cylindrical in each case.

9. Arrangement according to at least one of the preceding claims,
**characterised in that**
the antenna (1) arranged in a stationary manner is held by a plug-in connector part, to which a coaxial plug-in connector part can be plugged,
in particular wherein the plug-in connector part is screwed to the slotted waveguide part.

10. Arrangement according to at least one of the preceding claims,
**characterised in that**
the comb reflectors (2, 14) are arranged to the sides of the slot region, i.e. in particular in the portions, i.e. in particular are non-negligibly offset from the central position, i.e. in particular are arranged off-centre transversely to the rail direction or direction of travel,
and/or **in that**
the comb reflectors (2, 14) are screwed to the slotted waveguide part.

11. Arrangement according to at least one of the preceding claims,
**characterised in that**
the slotted waveguide is connected to the rail in an interlocking manner, in particular is hooked or clipped in,
or **in that** the slotted waveguide is integral with the rail, in particular is formed as a continuously cast profiled part, in particular as an aluminium continuously cast profiled part.

## Revendications

1. Ensemble de transmission de données entre une première partie d'installation et une partie mobile pouvant être déplacée par rapport à la première partie d' installation,
sachant que la partie mobile est un véhicule pouvant être déplacé sur un rail de la première partie d'installation,
sachant que la première partie d'installation présente un guide d'ondes à fente, sachant que la fente (13) s'étend dans la direction de déplacement,
sachant qu'une antenne (1) disposée sur la partie mobile pénètre par la fente (13) dans la région de guidage d'ondes du guide d'ondes à fente,
sachant que la section transversale de la région de guidage d'ondes est réalisée symétrique par rapport à la région de la fente, sachant que la région de guidage d'ondes est formée par la région de la fente et par deux régions partielles disposées de part et d'autre de la région de la fente,
sachant qu'une antenne (1) de la première partie d'installation pénètre de manière excentrée, considéré transversalement à la direction de déplacement, dans la région de guidage d'ondes du guide d'ondes à fente, donc dans une des régions partielles,
sachant qu'un réflecteur en peigne (2, 14), réalisé en un matériau à teneur en cuivre, est disposé dans chaque région partielle,
sachant que les réflecteurs en peigne (2, 14) sont réalisés d'un seul tenant entre eux,
sachant que les réflecteurs en peigne (2, 14) sont réalisés à partir d'une pièce pliée, sachant que la pièce pliée est reliée au profil de guide d'ondes à fente au moyen de vis dont les têtes de vis pénètrent dans la région de la fente,
sachant que les réflecteurs en peigne (2, 14) présentent un décalage mutuel dans la direction du rail ou direction de déplacement, et qu'on peut exciter dans le guide d'ondes le mode H10 des ondes électromagnétiques.

2. Ensemble selon la revendication précédente, **caractérisé en ce que** l'antenne est disposée dans une première région et un premier réflecteur en peigne (2) est disposé dans une première région partielle, sachant que le deuxième réflecteur en peigne (14) est disposé dans l'autre région partielle,
sachant en particulier qu'une autre antenne (1) est disposée dans une autre région, distante de la précédente dans la direction du rail, et un autre premier réflecteur en peigne (2) est disposé dans la première région partielle, et un autre réflecteur en peigne (14) est disposé dans l'autre région partielle.

3. Ensemble selon au moins une des revendications précédentes, **caractérisé en ce que**
un premier perçage, pratiqué dans le guide d'ondes à fente et destiné à recevoir une vis par laquelle la pièce pliée est reliée par vissage au profil de guide d'ondes à fente, présente un décalage par rapport à la position centrée dans la région de la fente,
et un deuxième perçage, pratiqué dans le guide d'ondes à fente et destiné à recevoir une deuxième vis par laquelle la pièce pliée est en outre reliée par vissage au profil de guide d'ondes à fente, présente un décalage en sens contraire par rapport à la position centrée dans la région de la fente, en particulier donc est disposé de l'autre côté par rapport à la position centrée.

4. Ensemble selon au moins une des revendications précédentes, **caractérisé en ce que** le rail est un élément de rail profilé, en particulier est fabriqué sous la forme d'un élément profilé coulé en continu en aluminium.

5. Ensemble selon au moins une des revendications précédentes, **caractérisé en ce que** le guide d'ondes à fente est fabriqué à partir d'un élément coulé en continu, en particulier coulé en continu en aluminium, en particulier coulé en continu en aluminium au moins partiellement anodisé.

6. Ensemble selon au moins une des revendications précédentes, **caractérisé en ce que** les réflecteurs en peigne (2, 14) sont réalisés identiques ou alternativement de différentes longueurs dans la direction du rail ou encore la direction de déplacement.

7. Ensemble selon au moins une des revendications précédentes, **caractérisé en ce que** les réflecteurs en peigne (2, 14) présentent respectivement des dents régulièrement espacées les unes des autres qui sont disposées en étant alignées les unes à la suite des autres dans la direction de déplacement, en particulier afin de réduire les pertes par courants de Foucault.

8. Ensemble selon au moins une des revendications précédentes, **caractérisé en ce que** les réflecteurs en peigne (2, 14) présentent respectivement un corps de base sur lequel les dents sont formées ou façonnées d'un seul tenant, sachant en particulier que les dents sont respectivement réalisées parallélépipédiques ou cylindriques.

9. Ensemble selon au moins une des revendications précédentes, **caractérisé en ce que** l'antenne (1) disposée à poste fixe est maintenue par un élément connecteur enfichable auquel un élément connecteur enfichable coaxial peut être relié par connexion enfichable,
sachant en particulier que l'élément connecteur enfichable est relié par vissage à l'élément formant guide d'ondes à fente.

10. Ensemble selon au moins une des revendications précédentes, **caractérisé en ce que** les réflecteurs en peigne (2, 14) sont disposés sur les côtés de la région de la fente, en particulier donc dans les régions partielles, en particulier donc présentent un décalage non négligeable par rapport à la position centrée, en particulier donc sont disposés de manière excentrée transversalement à la direction du rail ou direction de déplacement,
et/ou **en ce que** les réflecteurs en peigne (2, 14) sont reliés par vissage à l'élément formant guide d'ondes à fente.

11. Ensemble selon au moins une des revendications précédentes, **caractérisé en ce que** le guide d'ondes à fente est relié en engagement positif au rail, en particulier est enclenché ou clipsé,
ou **en ce que** le guide d'ondes à fente est réalisé d'un seul tenant avec le rail, en particulier sous forme d'élément profilé coulé en continu, en particulier sous forme d'élément profilé coulé en continu en aluminium.
